## Europäisches Patentamt

(19) **European Patent Office**

**Office européen des brevets**

(11) Veröffentlichungsnummer: **0 032 676**
**B1**

(12) # EUROPÄISCHE PATENTSCHRIFT

(45) Veröffentlichungstag der Patentschrift:
**22.02.84**

(51) Int. Cl.³: **B 60 H 1/22**, B 60 H 1/14,
F 24 D 7/00, F 24 J 3/04

(21) Anmeldenummer: **81100071.0**

(22) Anmeldetag: **08.01.81**

(54) **Einrichtung zum Beheizen einer Bedienungskabine.**

(30) Priorität: **17.01.80 DE 3001564**

(43) Veröffentlichungstag der Anmeldung:
**29.07.81 Patentblatt 81/30**

(45) Bekanntmachung des Hinweises auf die Patenterteilung:
**22.02.84 Patentblatt 84/8**

(84) Benannte Vertragsstaaten:
**AT CH FR GB LI NL SE**

(56) Entgegenhaltungen:
**CH - A - 266 304**
**DE - A - 2 539 565**
**DE - A - 2 916 870**
**DE - A - 2 928 999**
**DE - A - 2 932 448**
**DE - B - 1 247 884**
**DE - B - 2 623 621**
**FR - A - 2 315 666**
**GB - A - 747 024**
**GB - A - 1 082 501**
**US - A - 2 107 933**
**US - A - 2 764 147**
**US - A - 3 813 036**
**US - A - 4 192 456**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Tholen, Paul, Dipl.-Ing., Im Lüh 19,**
**D-5060 Berg.-Gladbach 3 (DE)**
Erfinder: **zur Nieden, Achim, Dipl.-Ing., Im Falkenhorst 8/82, D-5000 Köln 90 (DE)**

## Einrichtung zum Beheizen einer Bedienungskabine

Die Erfindung betrifft eine Einrichtung zum Beheizen der Bedienungskabine einer von einer Brennkraftmaschine angetriebenen Vorrichtung oder eines Fahrzeuges, wobei mittels einer von der Brennkraftmaschine angetriebenen Hydraulikpumpe aus der Ölwanne, dem Ölsammelbehälter od. dgl. der Brennkraftmaschine Öl einem in der Bedienungskabine angeordneten Flüssigkeit-Luft-Wärmetauscher zugeführt und von dort durch eine Rücklaufleitung in das Ölsystem der Brennkraftmaschine zurückgeführt wird.

Eine derartige Einrichtung zum Beheizen der Bedienungskabine eines Fahrzeuges mit einem die Schmierölwärme der Brennkraftmaschine ausnutzenden Wärmetauscher ist aus der DE-A-2 623 621 bekannt. Diese Anordnung hat den Nachteil, daß Heizwärme nur bei betriebswarmen und in ausreichendem Maße daher nur bei belastetem Motor zur Verfügung steht. Dieses Problem tritt prinzipiell in gleicher Weise bei luft- und wassergekühlten Brennkraftmaschinen auf.

Weiterhin ist aus der US-A-3 813 036 ein als Stationäraggregat ausgebildetes Flüssigkeitsheizungssystem bekannt, bei dem die zu erwärmende Flüssigkeit in zwei parallel geschalteten Heizelementen aufgrund intensiver Wandreibung erwärmt wird. Zur Temperaturregelung sind hier unter anderem Zwei-Wege-Ventile vorgesehen, die die geförderte Flüssigkeitsmenge einerseits auf die größenordnungsmäßig verschieden dimensionierten Heizelemente aufteilen und andererseits eine Bypaßleitung zu einem Vorratsbehälter beherrschen. Aussagen über die besondere Problematik von Heizeinrichtungen mit verbrennungsmotorisch betriebenen Hydraulikpumpen und einem separaten Schmierölsystem für die Brennkraftmaschine sind hier allerdings nicht angegeben.

Der Erfindung liegt die Aufgabe zugrunde, eine gattungsgemäße Einrichtung derart weiterzubilden, daß die mechanisch von der Brennkraftmaschine zugeführte Energie mit größtmöglichem Anteil unmittelbar zur Beheizung der Bedienungskabine im Wärmetauscher freizusetzen ist. Diese Aufgabe wird erfindungsgemäß dadurch gelöst, daß ein Reibungswärme erzeugendes Arbeitselement, beispielsweise eine Drossel, in der Druckleitung zwischen der Hydraulikpumpe und dem Flüssigkeit-Luft-Wärmetauscher angeordnet ist und daß ein verstellbarer oder geregelter Mengenteiler entweder in der Rücklaufleitung zwischen dem Flüssigkeit-Luft-Wärmetauscher und der Ölwanne oder in der Zuführungsleitung zwischen dem Arbeitselement und dem Flüssigkeit-Luft-Wärmetauscher vorgesehen und über eine Kurzschlußleitung mit der Ansaugleitung der Hydraulikpumpe verbunden ist.

Die in der Drossel erzeugte Wärmemenge bewirkt eine Temperatursteigerung im unverzweigten Kreislauf, die am Wärmetauscher ein erhöhtes Temperaturgefälle erzeugt, so daß ein Beitrag zur Heizung gegeben ist und zugleich eine Erwärmung der Ölmenge im Ölsumpf und der Motorbauteile stattfindet. Dies gilt für die Warmlaufphase und für alle Betriebszustände, bei denen die Schmieröltemperatur im Ölsumpf unter der Rücklauftemperatur aus dem Wärmetauscher liegt, wie z. B. bei längeren Leerlaufphasen und niedrigerer Außentemperatur.

Die Aufgabe, die im Arbeitselement erzeugte Wärme ganz zu Heizzwecken und nicht zur Erwärmung des Ölsumpfinhalts zu verwenden, erfüllt in vorteilhafter Weise der Mengenteiler, der vor oder hinter dem Flüssigkeit-Luft-Wärmetauscher angeordnet eine Kurzschlußleitung zu einem kleinen Kreislauf mit Hochdruckförderpumpe, Arbeitselement und gegebenenfalls Flüssigkeit-Luft-Wärmetauscher aufweist, in welchem eine Teilmenge zur beschleunigten Aufheizung mehrfach umgewälzt wird. Ist die Temperatur der Füllung des Sammelbehälters angestiegen, insbesondere über die Rücklauftemperatur aus diesem kleinen Kreislauf, schließt der Mengenteiler die Kurzschlußleitung und die dem Sammelbehälter zugeführte Wärme trägt zur Heizung bei.

Zur Steuerung des Mengenteilers sind verschiedene temperatur- oder temperaturdifferenzabhängige Regelglieder anwendbar.

Zur weiter verbesserten Wärmeausnutzung kann erfindungsgemäß ein Flüssigkeit-Flüssigkeit-Wärmetauscher in die Leitung vom und zum Sammelbehälter eingesetzt werden, der eine Vorwärmung des Heizmittelstroms bewirkt, sofern die Rücklauftemperatur über die Vorlauftemperatur steigt. Um einen umgekehrten Wärmefluß zu vermeiden, sind ein Bypaß und verschiedene Möglichkeiten zu dessen Regelung vorgesehen.

Das Arbeitselement ist in besonderer erfindungsgemäßer Gestaltung als variable Drossel ausgeführt, deren Drosselspalt in Abhängigkeit der Druckverhältnisse an der Drossel eingestellt wird. Auf den Spalt wirkt im Schließsinn zusammen mit einer Feder ein Servoelement, das zum einen über eine Bohrung geringen Querschnitts mit der Druckleitung vor der Drosselstelle und zum anderen über eine mit einem Justierventil versehene Leitung mit dem Sammelbehälter verbunden ist. Durch Einstellen der Durchflußmenge im Justierventil kann der Druck im Servoelement zwischen dem Wert vor der Drossel und dem im Sammelbehälter variiert werden.

In besonders günstiger Weise können Absperrventil und Justierventil zu einem handbetätigten Bedienungselement zusammengefaßt werden, das die Stellbereiche von beiden verbindet. Hierbei wird zunächst durch Schließen des Absperrventils die Drossel beaufschlagt und anschließend der Federdruck gegen den Drosselspalt durch Schließen des Justierventils zunehmend um den ansteigenden Druck im Servoelement verstärkt. Hierbei nimmt die Verlustleistung und damit die Wärmeerzeugung zu.

In kompakter Gestaltung werden die Bauteile Arbeitselement, Mengenteiler, Absperrventil und Justierventil zu mehreren oder alle gemeinsam in einem Gehäuse untergebracht.

Neben der Regelung des Heizmittelstroms kann auch der Heizungsluftstrom geregelt werden, insbesondere in der Form, daß er bei unverändertem Volumenstrom mit veränderlichem Anteil dem zu beheizenden Raum oder der Umgebung zugeführt wird.

Schematische Darstellungen, Einzelheiten und Diagramme zur Erfindung sind in den Zeichnungen dargestellt.

Im einzelnen zeigen

Fig. 1 einen Kreislauf mit Mengenteiler hinter dem Flüssigkeit-Luft-Wärmetauscher,

Fig. 2 einen Kreislauf nach Fig. 1 mit Regeleinrichtung,

Fig. 3 einen Kreislauf mit Mengenteiler vor dem Flüssigkeit-Luft-Wärmetauscher,

Fig. 4 einen Kreislauf mit zusätzlichem Flüssigkeit-Flüssigkeit-Wärmetauscher in Ansaug- und Rücklaufleitung,

Fig. 5 eine Kombination von Absperrventil und Justierventil in einem Gehäuse mit Drossel und Mengenteiler,

Fig. 6 Diagramme der Funktionen von Absperr- und Justierventil.

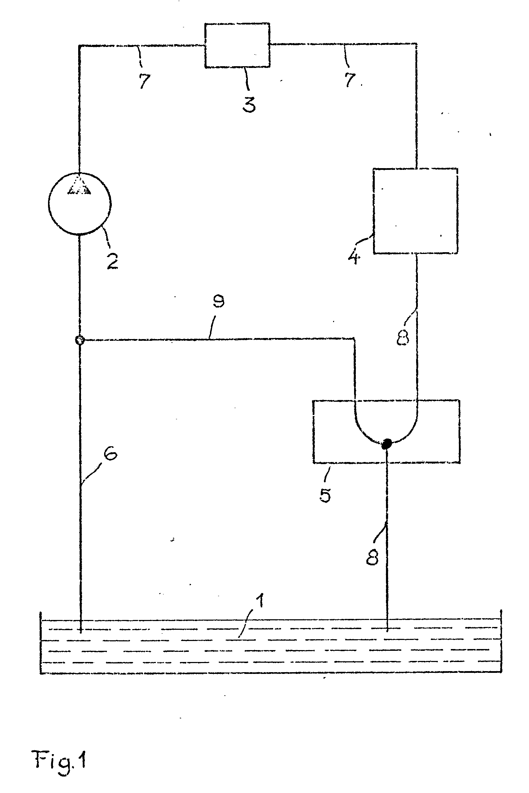

In Fig. 1 ist das Heizungssystem mit einem Sammelbehälter 1, einer Hochdruckförderpumpe 2, einem Arbeitselement 3, einem Flüssigkeit-Luft-Wärmetauscher 4 und einem Mengenteiler 5 dargestellt. Die Hochdruckförderpumpe 2 ist mit dem Sammelbehälter 1 durch eine Ansaugleitung 6 und mit dem Flüssigkeit-Luft-Wärmetauscher durch eine Vorlaufteilung 7 verbunden, in der das Arbeitselement 3 angedeutet ist. Vom Flüssigkeit-Luft-Wärmetauscher 4 führt eine Rücklaufleitung 8 zum Sammelbehälter 1. Der Mengenteiler 5 ist in der gezeigten Ausführung in der Rücklaufleitung 8 angeordnet und hat eine Abzweigung in die Kurzschlußleitung 9, die wiederum in die Ansaugleitung 6 mündet.

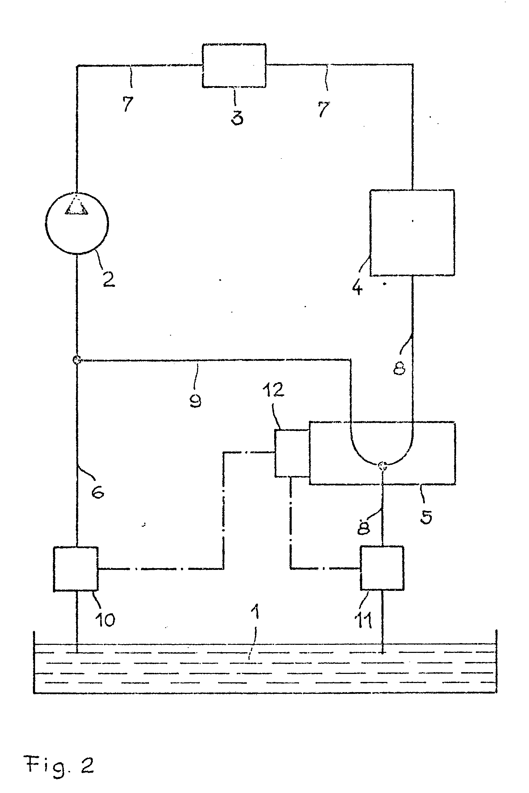

In Fig. 2 sind zwei Temperaturfühler 10 und 11 in der Ansaug- bzw. Rücklaufleitung 6, 8 angeordnet, die mit einer Vergleichsstelle 12 verbunden sind, die den Mengenteiler 5 steuert. Die Anordnung der Bauteile entspricht Fig. 1.

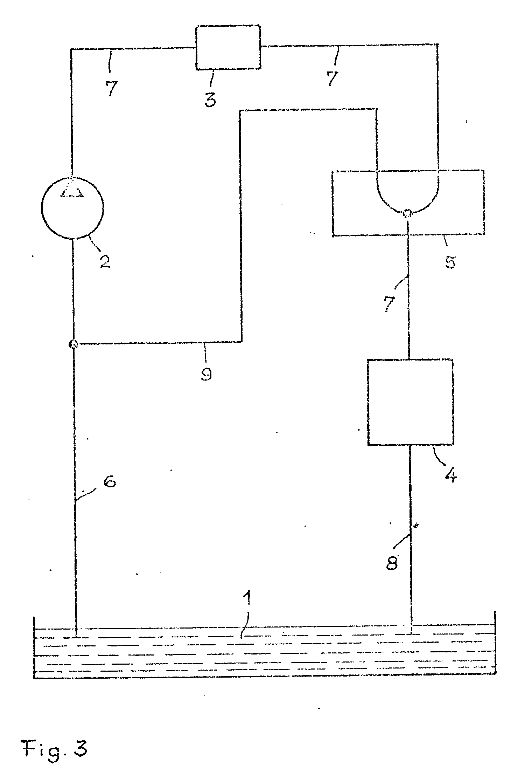

In Fig. 3 ist der Mengenteiler 5 in der Vorlaufleitung 7 zwischen Arbeitselement 3 und Flüssigkeit-Luft-Wärmetauscher 4 angeordnet. Im übrigen entspricht die Ausführung der aus Fig. 1.

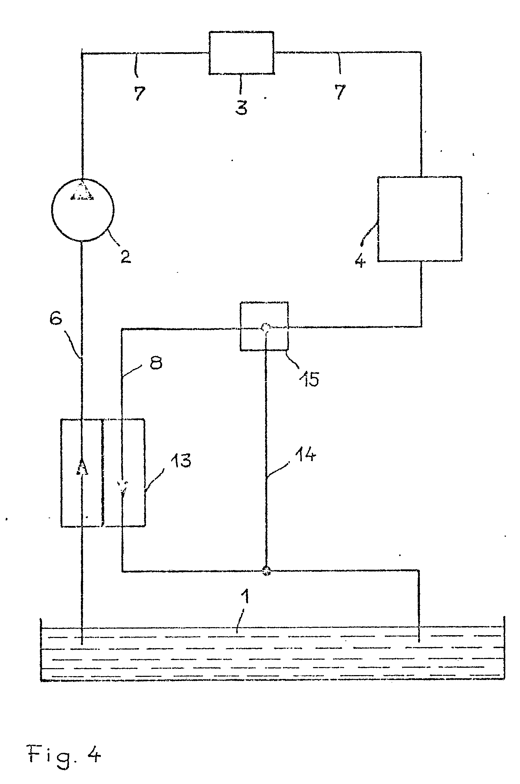

Fig. 4 zeigt ein Heizungssystem mit einem Flüssigkeit-Flüssigkeit-Wärmetauscher 13, der zum einen in der Ansaugleitung 6, zum anderen in der Rücklaufleitung 8 angeordnet ist. Parallel zum Flüssigkeit-Flüssigkeit-Wärmetauscher 13 liegt im Rücklaufstrom ein Bypaß 14, der von einem Drei-Wege-Ventil 15 temperaturabhängig gesteuert wird.

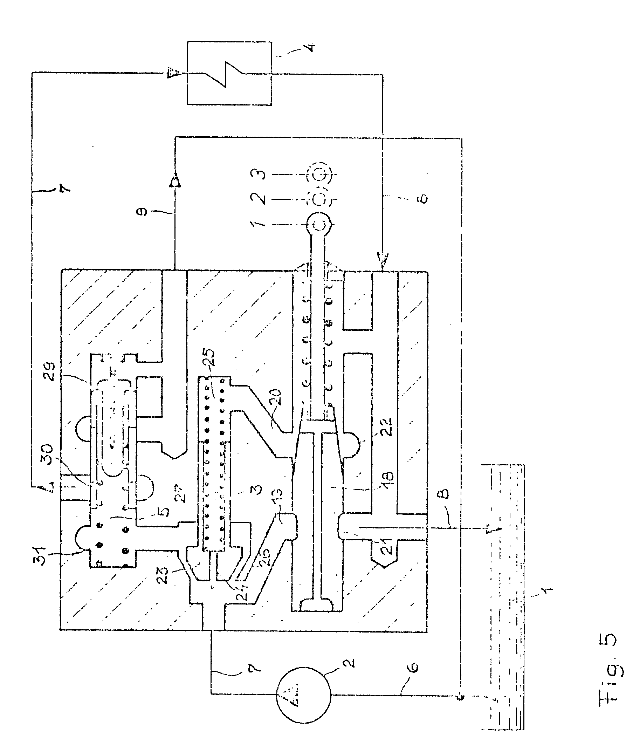

Fig. 5 zeigt ein Heizungssystem mit einem als variable Drossel in Kombination mit einem Absperr- und Justierventil ausgeführten Arbeitselement, in dessen Gehäuse zusätzlich der Mengenteiler integriert ist. Das Absperr- und Justierventil ist mit einer Zugstange 18 versehen, die in drei kennzeichnenden Stellungen dargestellt ist. In der Stellung »1« sind die Entlastungsleitung 19 und die Verbindungsleitung 20 beide geöffnet. Beim Übergang von der Stellung »1« zur Stellung »2« wird das Absperrventil 21 geschlossen, das Justierventil 22 ist noch geöffnet. Der Heizmittelstrom fließt über den Drosselspalt. Der Druck im Servoelement 25 hinter dem Ventilkörper 23 stimmt mit dem im Sammelbehälter 1 überein. Beim Übergang von der Stellung »2« zur Stellung »3« wird das Justierventil 22 ebenfalls geschlossen. Über eine Ausgleichsbohrung 24 im Ventilkörper 23 stellt sich der Druck im Servoelement 25 auf den Betrag in der Vorlaufleitung 7 vor der Drossel ein. Am Drosselspalt 26 stellt sich ein Gleichgewicht zwischen dem Druck des Heizmittels vor der Drossel und der Summe aus dem Anpreßdruck der Feder 27 und dem Druck im Servoelement 25 ein. Der Heizmittelstrom wird zum Mengenteiler 5 geleitet. Dieser besitzt einen temperaturabhängigen Quellkörper 29, der einen Schieber 30 gegen die Rückstellkraft einer Feder 31 so verstellt, daß entweder die Vorlaufleitung 7 zum Flüssigkeit-Luft-Wärmetauscher 4 oder die Kurzschlußleitung 9 zur Hochdruckförderpumpe 2 freigegeben werden.

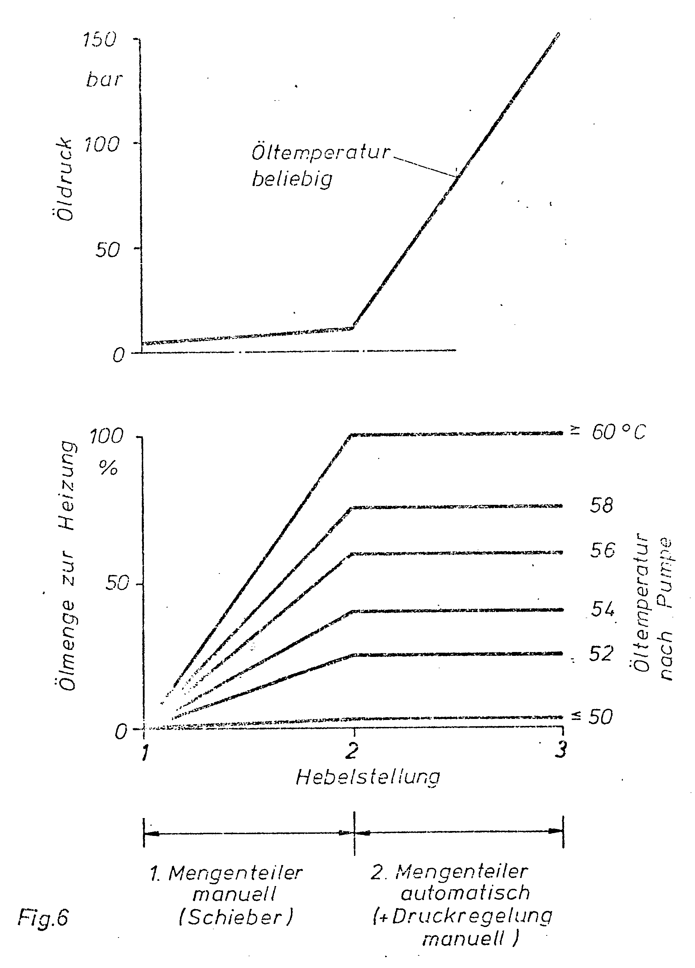

Fig. 6 zeigt in zwei Diagrammen die Abhängigkeit des Heizmittelstroms — hier speziell des Ölmengenstroms — zum Flüssigkeit-Luft-Wärmetauscher und des Heizmitteldrucks — hier speziell des Öldrucks — vor der Drosselstelle von der Stellung des Absperr- und Justierventils mit der Heizmitteltemperatur, hier als Öltemperatur nach der Pumpe, als Parameter.

**Patentansprüche**

1. Einrichtung zum Beheizen der Bedienungskabine einer von einer Brennkraftmaschine angetriebenen Vorrichtung oder eines Fahrzeuges, wobei mittels einer von der Brennkraftmaschine angetriebenen Hydraulikpumpe (2) aus der Ölwanne, dem Ölsammelbehälter od. dgl. der Brennkraftmaschine Öl einem in der Bedienungskabine angeordneten Flüssigkeit-Luft-Wärmetauscher (4) zugeführt und von dort durch eine Rücklaufleitung (8) in das Ölsystem der Brennkraftmaschine zurückgeführt wird, dadurch gekennzeichnet, daß ein Reibungswärme erzeugendes Arbeitselement (3), beispielsweise eine Drossel, in der Druckleitung zwischen der Hydraulikpumpe (2) und dem Flüssigkeit-Luft-Wärmetauscher (4) angeordnet ist, und daß ein verstellbarer oder geregelter Mengenteiler (5) entweder in die Rücklaufleitung (8) zwischen dem Flüssigkeit-Luft-Wärmetauscher (4) und der Ölwanne oder in der Zuführungsleitung (7) zwischen dem Arbeitselement (3) und dem Flüssigkeit-Luft-Wärmetauscher (4) vorgesehen und über eine Kurzschlußleitung (9) mit der Ansaugleitung (6) der Hydraulikpumpe (2) verbunden ist.

2. Einrichtung nach Anspruch 1, dadurch gekennzeichnet, daß ein Flüssigkeit-Flüssigkeit-Wärmetauscher (13) einerseits vom Heizmittelstrom in der Ansaugleitung (6) zwischen Sammelbehälter (1) und Hochdruckförderpumpe (2) und andererseits vom Heizmittelstrom in der Rücklaufleitung (8) zwischen Flüssigkeit-Luft-Wärmetauscher (4) und Sammelbehälter (1) beaufschlagt wird.

3. Einrichtung nach einem der Ansprüche 1 oder 2, dadurch gekennzeichnet, daß in der Rücklaufleitung (8) ein Bypaß (14) parallel zum Flüssigkeit-Flüssigkeit-Wärmetauscher (13) angeordnet ist, der am Verzweigungspunkt ein verstellbares oder geregeltes Drei-Wege-Ventil (15) aufweist.

4. Einrichtung nach einem der Ansprüche 1 bis 3, dadurch gekennzeichnet, daß der Mengenteiler (5) als temperaturgeregeltes Ventil ausgebildet ist, das in Abhängigkeit von einer vorgegebenen Motoröltemperatur an einer bestimmten Stelle, z. B. in der Ölwanne, die Kurzschlußleitung (9) und die Rücklaufleitung (8) gegensinnig im Durchfluß steuert.

5. Einrichtung nach einem der Ansprüche 1 bis 3, dadurch gekennzeichnet, daß der Mengenteiler (5) als temperaturgeregeltes Ventil ausgebildet ist, das bei zunehmender Zuströmtemperatur die Kurzschlußleitung (9) zur Hochdruckförderpumpe (2) im Schließsinn steuert.

6. Einrichtung nach einem der Ansprüche 1 bis 3, dadurch gekennzeichnet, daß der Mengenteiler (5) als temperaturdifferenzgeregeltes Ventil ausgebildet ist, das bei positiver Temperaturdifferenz zwischen dem Heizmittelstrom in der Rücklaufleitung (8) und dem Heizmittelstrom in der Ansaugleitung (6) die Kurzschlußleitung (9) zur Hochdruckförderpumpe (2) im Öffnungssinn und die Rücklaufleitung (8) im Schließsinn steuert.

7. Einrichtung nach einem der Ansprüche 1 bis 6, dadurch gekennzeichnet, daß das Drei-Wege-Ventil (15) als temperaturgeregeltes Ventil ausgebildet ist, das bei zunehmender Temperatur in der Ansaugleitung (6) den Bypaß (14) parallel zum Flüssigkeit-Flüssigkeit-Wärmetauscher (13) in der Rücklaufleitung (8) im Öffnungssinn steuert.

8. Einrichtung nach einem der Ansprüche 1 bis 6, dadurch gekennzeichnet, daß das Drei-Wege-Ventil (15) als temperaturdifferenzgeregeltes Ventil ausgebildet ist, das bei positiver Temperaturdifferenz zwischen dem Heizmittelstrom der Rücklaufleitung (8) und dem Heizmittelstrom in der Ansaugleitung (6) die Kurzschlußleitung (9) zur Hochdruckförderpumpe (2) im Öffnungssinn und die Rücklaufleitung (8) im Schließsinn steuert.

9. Einrichtung nach einem der Ansprüche 1 bis 8, dadurch gekennzeichnet, daß das Arbeitselement (3) einen als variable Drossel ausgebildeten Ventilkörper (23) aufweist, daß eine Ausgleichsbohrung (24) geringen Querschnitts von der flüssigkeitsdruckbelasteten Vorderseite zur federbelasteten Rückseite des Ventilkörpers (23) verläuft und daß eine Verbindungsleitung (20) von einem von der Rückseite begrenzten Servoelement (25) zum Sammelbehälter (1) besteht, in der ein verstellbares Justierventil (22) angeordnet ist.

10. Einrichtung nach einem der vorhergehenden Ansprüche, dadurch gekennzeichnet, daß das Absperrventil (21) und das Justierventil (22) ein gemeinsames Gehäuse (17) und einen gemeinsamen Schieber (18) mit verschiedenen Steuerkanten bzw. Sitzen aufweisen und daß die Stellbereiche bei geschlossenem Absperrventil (21) und geöffnetem Justierventil (22) unmittelbar aneinandergrenzen und im Stellbereich der einen Durchflußmenge die jeweils andere Durchflußmenge unverändert bleibt.

11. Einrichtung nach einem der vorhergehenden Ansprüche, dadurch gekennzeichnet, daß das Arbeitselement (3) mit Absperrventil (21) und/oder Justierventil (22) in einem gemeinsamen Gehäuse (17) angeordnet sind.

12. Einrichtung nach einem der vorhergehenden Ansprüche, dadurch gekennzeichnet, daß der Mengenteiler (5) mit dem Absperrventil (21) und/oder dem Justierventil (22) in einem gemeinsamen Gehäuse angeordnet sind.

13. Einrichtung nach einem der vorhergehenden Ansprüche, dadurch gekennzeichnet, daß das Heizungssystem mit anderen Umlaufsystemen, insbesondere mit Schmier- und Hydraulikeinrichtungen in Reihen- und/oder Parallelanordnungen verbunden sind.

**Claims**

1. A heating system for heating the service cab of a plant or a vehicle powered by an internal combustion engine, in which system oil is fed by a high-pressure hydraulic pump (2) driven by the internal combustion engine from the engine's oil sump, oil reservoir or the like to a fluid-to-air heat exchanger (4) and hence conveyed back through a return duct (8) to the oil circuit of the internal combustion engine, characterized in that a frictional heat-generating operating element (3), for example a throttle, is disposed in the feed duct extending between the hydraulic pump (2) and the fluid-to-air heat exchanger (4), and in that either the return duct (8) extending between the fluid-t-air heat exchanger (4) and the oil sump or the feed duct (7) extending between the operating element (3) and the fluid-to-air heat exchanger (4) includes an adjustable or controlled volume governor (5) connected by a short-circuiting duct (9) to the suction duct (6) leading to the hydraulic pump (2).

2. A system according to claim 1, characterized in that a fluid-to-fluid heat exchanger (13) is traversible by, on the one hand, the stream of heating medium passing through the suction duct (6) between the reservoir (1) and the high-pressure pump (2) and, on the other hand, the stream of heating medium passing through the return duct (8) between the fluid-to-air heat exchanger (4) and the reservoir (1).

3. A system according to claim 1 or claim 2, characterized in that the return duct (8) is connected to a by-pass (14) for by-passing the fluid-to-fluid heat exchanger (13), and in that the by-pass includes an adjustable or controlled three-way valve (15) arranged at its junction with the return duct.

4. A system according to any of the claims 1 to 3, characterized in that the volume governor (5) is a temperature-controlled valve which in dependence on a predetermined engine oil temperature prevailing at a selected location, for example in the sump, controls the flow through the short-circuiting duct (9) and the return duct (8) in mutually cancelling directions.

5. A system according to any of the claims 1 to 3, characterized in that the volume governor (5) is a temperature-controlled valve which, if the temperature of the stream reaching it rises, closes the short-circuiting duct (9) leading to the high-pressure pump (2).

6. A system according to any of the claims 1 to 3, characterized in that the volume governor (5) is a temperature-difference-controlled valve which, if the temperature difference between the stream of heating medium passing through the return duct (8) and that passing through the suction duct (6) is positive, opens the short-circuiting duct (9) leading to the high-pressure pump (2) and closes the return duct (8).

7. A system according to any of the claims 1 to 6, characterized in that the three-way valve (15) is a temperature-controlled one which, if the temperature in the suction duct (6) rises, opens the by-pass (14) serving for by-passing the fluid-to-fluid heat exchanger (13) and being connected to the return duct (8).

8. A system according to any of the claims 1 to 6, characterized in that the three-way valve (15) is a temperature-difference-controlled one which, if the temperature difference between the stream of heating medium passing through the return duct (8) and that passing through the suction duct (6) is positive, opens the short-circuiting duct (9) leading to the high-pressure pump (2) and closes the return duct (8).

9. A system according to any of the claims 1 to 8, characterized in that the operating element (3) includes a valve body (23) arranged to function as a variable throttle, that a balancing bore (24) of small cross-section extends from the valve body's (23) front face, which is biased by the pressure of the fluid, to the spring-biased rear face thereof, and in that a connecting duct (20) extends from a servomechanism (25), which terminates at said rear face, to the reservoir (1) and includes an adjustable valve (22).

10. A system according to any of the preceding claims, characterized in that a check valve (21) and the adjustable valve (22) are provided with a common casing (17) and a common slide (18) having different control edges or seatings, that, if the check valve (21) is in its closing position and the adjustable valve (22) in its open position, their adjusting ranges are directly adjacent to each other, and in that adjustment — within the adjusting range — of one of the flow volumes does not affect the other flow volume.

11. A system according to any of the preceding claims, characterized in that the operating element (3) including the check valve (21) and/or the adjustable valve (22) are arranged in the common casing (17).

12. A system according to any of the preceding claims, characterized in that the volume governor (5) including the check valve (21) and/or the adjustable valve (22) are arranged in the common casing.

13. A system according to any of the preceding claims, characterized in that the heating system is connected in series and/or in parallel to another circulatory system, particularly a lubricating and/or a hydraulic system.

**Revendications**

1. Installation de chauffage de la cabine de service d'un dispositif ou d'un véhicule entraîné par un moteur à combustion interne, dans laquelle à l'aide d'une pompe hydraulique (2) entraînée par le moteur à combustion interne, de l'huile est puisée de la bâche ou du collecteur d'huile ou analogue du moteur à combustion interne vers un échangeur de chaleur liquide/air (4) prévu dans la cabine de service et de là par une conduite de retour (8) dans le système d'huile du moteur à combustion interne, caractérisée en ce qu'un élément fonctionnel (3) générant de la chaleur par frottement, par exemple une vanne d'étranglement est prévu dans la conduite de pression entre la pompe hydraulique (2) et l'échangeur de chaleur liquide/air (1) et un diviseur de débit réglable ou réglé (5) est prévu soit dans la conduite de retour (8) entre l'échangeur de chaleur liquide/air (4) et la bâche à huile ou dans la conduite d'alimentation (7) entre l'élément fonctionnel (3) et l'échangeur de chaleur liquide/air (4), et est relié par une conduite de court-circuit (9) à la conduite d'aspiration (6) de la pompe hydraulique (2).

2. Installation selon la revendication 1, caractérisée en ce qu'un échangeur de chaleur liquide/liquide (13) reçoit d'une part le fluide caloporteur dans la conduite d'aspiration (6) entre le réservoir-collecteur (1) et la pompe haute pression (2) et d'autre part le fluide caloporteur de la conduite de retour (8) entre l'échangeur de chaleur liquide/air (4) et le réservoir-collecteur (1).

3. Installation selon l'une quelconque des revendications 1 ou 2, caractérisée en ce que dans la conduite de retour (8), il est prévu un court-circuit (14) parallèle à l'échangeur de chaleur liquide/liquide (13) et qui comporte au point de dérivation, une vanne à trois voies (15) réglable ou réglée.

4. Installation selon l'une des revendications 1 à 3, caractérisée en ce que le diviseur de débit (5) est une vanne réglée en fonction de la température et qui suivant une température prédéterminée d'huile du moteur en un point défini par exemple dans la bâche à huile, commande le passage en sens opposé pour la conduite de court-circuit (9) et la conduite de retour (8).

5. Installation selon l'une des revendications 1 à 3, caractérisée en ce que le diviseur de débit (5) est réalisé sous forme de vanne réglée en fonction de la température, et en ce que pour une température croissante du flux d'alimentation, la conduite de court-circuit (9) est commandée dans le sens de la fermeture vers la pompe d'alimentation haute pression (2).

6. Installation selon l'une des revendications 1 à 3, caractérisée en ce que le diviseur de débit (5) est réalisé sous forme de vanne réglée par une différence de température, en ce que pour une différence positive de température entre le fluide caloporteur dans la conduite de retour (8) et le fluide caloporteur dans la conduite d'aspiration (6), la conduite de court-circuit (9) vers la pompe d'alimentation haute pression (2) est commandée dans le sens de l'ouverture et dans la conduite de retour (8) dans le sens de la fermeture.

7. Installation selon l'une des revendications 1 à 6, caractérisée en ce que la vanne à trois voies (15) est réalisée en forme de vanne réglée en température, et qui pour une température croissante dans la conduite d'aspiration (6), commande le court-circuit (14) parallèlement à l'échangeur de chaleur liquide/liquide (13) dans la conduite de retour (8), dans le sens de l'ouverture.

8. Installation selon l'une des revendications 1 à 6, caractérisée en ce que la vanne à trois voies (15) est réalisée en forme de vanne réglée par une différence de température, en ce que pour une différence positive de température entre le fluide caloporteur dans la conduite de retour (8) et le fluide caloporteur dans la conduite d'aspiration (6), la conduite de court-circuit (9) vers la pompe d'alimentation haute pression (2) est commandée dans le sens de l'ouverture et la conduite de retour (8) dans le sens de la fermeture.

9. Installation selon l'une des revendications 1 à 8, caractérisée en ce que l'élément fonctionnel (3) comporte un corps de vanne (23) réalisé en forme d'organe d'étranglement variable, en ce qu'un perçage d'équilibrage (24) de faible section relie le côté avant chargé par la pression du fluide et le côté arrière chargé par un ressort du corps de vanne (23) et en ce qu'une conduite de liaison (20) est prévue entre l'élément d'asservissement (25) délimité par le côté arrière et le réservoir-collecteur (1), et dans laquelle se trouve une vanne d'ajustage (22) réglable.

10. Installation selon l'une des revendications précédentes, caractérisée en ce que la vanne d'arrêt (21) et la vanne d'ajustage (22) ont un boîtier commun (17) et un tiroir commun (18) avec différentes arêtes de commande ou sièges et en ce que les zones de réglage pour la vanne d'arrêt (21) fermée et la vanne d'ajustage (22) ouverte sont directement adjacentes et dans la zone de réglage de l'un des débits, l'autre débit reste toujours inchangé.

11. Installation selon l'une des revendications précédentes, caractérisée en ce que l'élément fonctionnel (3) avec la vanne d'arrêt (21) et/ou la vanne d'ajustage (22) sont prévus dans un boîtier commun (17).

12. Installation selon l'une des revendications précédentes, caractérisée en ce que le diviseur de débit (5) et la vanne d'arrêt (21) et/ou la vanne d'ajustage (22) sont prévus dans un boîtier commun.

13. Installation selon l'une des revendications précédentes, caractérisée en ce que le système de chauffage est relié aux autres systèmes de circulation notamment aux installations de graissage et aux installations hydrauliques, en séries et/ou en parallèle.

Fig.1

Fig. 2

Fig. 3

Fig. 4

Fig. 5

Fig.6